# EUROPEAN PATENT APPLICATION

(11) **EP 3 381 526 A1**
(43) Date of publication of application: **03.10.2018**
(21) Application number: 17174778.5
(22) Date of filing: 07.06.2017
(51) Int. Cl.: A63G 21/18, A63G 31/00, A63G 31/12

(54) **WATER SLIDING DEVICE**

(30) Priority: 31.03.2017 CN 201720335381 U
(71) Applicant: Bestway Inflatables & Material Corp., Shanghai 201812 (CN)
(72) Inventor: HUANG, Shuiyong, Shanghai, 201812 (CN)
(74) Representative: Inchingalo, Simona

(57) **Abstract**

The present disclosure provides a water sliding device. The water sliding device includes a sliding portion and a water valve. The sliding portion has a sliding surface suitable for a user sliding thereon, wherein a water spray pipe, which has a plurality of water spray holes, is disposed on the sliding portion. The water spray pipe is adapted to be connected with a water source via the water valve, and the water valve is adapted to automatically switch from an opened state to a closed state, to make the plurality of water spray holes of the water spray pipe automatically stop spraying water. Accordingly, the water sliding device of the present disclosure can reduce water consumption and save water resource.

## Description

### TECHNICAL FIELD

The present disclosure generally relates to the technical field of entertainment device, and more particularly, to a water sliding device.

### BACKGROUND

Existing water sliding devices, such as water slides, are designed for outdoor recreations and deeply loved by children. Usually, a water slide is made of a piece of flexible plastic sheet or strip, and water spray tube connected with a water source and coupled along a side of the flexible plastic sheet to create a wet and slippery sliding surface. The water slide can be fixed onto the ground. When the water slide is in use, the user runs and slides on the piece of flexible plastic sheet. Due to inertia generated during running, the user can travel on the piece of flexible plastic sheet for a certain distance.

### SUMMARY

An object of the present disclosure is to provide a water sliding device.

In order to achieve above recited object, embodiments of the present disclosure provide a water sliding device. The water sliding device includes a sliding portion and a water valve. The sliding portion may have a sliding surface suitable for a user sliding thereon. The sliding portion may be disposed with a water spray pipe which has a plurality of water spray holes. The water spray pipe can be connected with a water source via the water valve. The water valve can automatically switch from an opened state to a closed state, so as to make the plurality of water spray holes of the water spray pipe automatically stop spraying water.

In some embodiments, the sliding portion may include a flexible sheet.

In some embodiments, the sliding portion may include an upper sheet and a lower sheet, edges of the upper sheet and edges of the lower sheet may be connected, and the upper sheet and the lower sheet may define a first chamber adapted to be filled with air or water.

In some embodiments, the water spray pipe may include at least one first water spray pipe extending from a starting end of the sliding portion to a destination end of the sliding portion, wherein the destination end is opposite to the starting end.

In some embodiments, the at least one first water spray pipe may be disposed along at least one of a first lateral edge and a second lateral edge of the sliding portion.

In some embodiments, the at least one first water spray pipe may be disposed between the first lateral edge and the second lateral edge of the sliding portion, and the sliding portion is divided to a plurality of sliding paths by the at least one first water pipe.

In some embodiments, a number of the at least one first water spray pipe may be more than one, and the more than one first water spray pipe may be arranged in intervals.

In some embodiments, the water spray pipe may further include a second water spray pipe extending from the first lateral edge of the sliding portion to the second lateral edge of the sliding portion.

In some embodiments, the second water spray pipe may communicate with a first water spray pipe.

In some embodiments, the second water spray pipe may communicate with the first water spray pipe via a connecting pipe.

In some embodiments, the plurality of water spray holes may be arranged on the water spray pipe in intervals.

In some embodiments, the water sliding device may further include a bumper which can be connected with the destination end of the sliding portion.

In some embodiments, the bumper may be provided with a second chamber adapted to be filled with air or water.

In some embodiments, the bumper may include a top sheet and a bottom sheet, edges of the top sheet and edges of the bottom sheet may be connected, and the top sheet and the bottom sheet define the second chamber.

In some embodiments, the bumper may be connected with the sliding portion via a connecting sheet.

In some embodiments, the water valve may be arranged at a position close to a starting end of the sliding portion.

In some embodiments, an outlet of the water valve may communicate with an end of the first water spray pipe close to the starting end.

In some embodiments, an inlet of the water valve may communicate with the water source via an inlet pipe, and the inlet of the water valve may be detachably connected with the inlet pipe.

In some embodiments, the water valve may include an inlet passage and an outlet passage, wherein the inlet passage can be used to communicate with the water source, the outlet passage may communicate with the water spray pipe. The water valve may further include a pressure-regulating chamber body and a movable valve plate, wherein the pressure-regulating chamber body and a movable valve plate can define a pressure-regulating chamber, the pressure-regulating chamber can communicate with the inlet passage via a water-inlet hole formed on the movable valve plate, the pressure-regulating chamber body may be provided with a drain hole thereon, the drain hole may communicate with the pressure-regulating chamber. The movable valve plate can move between a first position and a second position different pressures inside the pressure-regulating chamber and outside the pressure-regulating chamber acting on the movable valve plate so as to block or open the outlet passage. The water valve may further include a water-draining assembly which can block or open the drain hole. The water valve may further include control assembly which is electrically connected with the water-draining assembly so as to control the water-draining assembly to block or open the drain hole.

In some embodiments, the water-draining assembly may include a solenoid valve configured with a metal core assembly; when a forward current passes through an electromagnetic coil of the solenoid valve, the metal core assembly of the solenoid valve can move to a position to open the drain hole; and when a reverse current passes through the electromagnetic coil of the solenoid valve, the metal core assembly of the solenoid valve can move to a position to close the drain hole.

In some embodiments, the control assembly may include a start button and a control circuitry; the control circuitry may be configured to: when the start button is pressed, control the water-draining assembly to open the drain hole, so as to make the movable valve plate open the outlet passage, so that the water valve switches to the opened state, and after a predetermined period of time, control the water-draining assembly to block the drain hole, so as to make the movable valve plate block the outlet passage, so that the water valve switches to the closed state.

In some embodiments, the control assembly may further include a timer for determining the predetermined period of time.

In some embodiments, the timer may include multiple shifts corresponding to multiple predetermined periods of time.

In some embodiments, the timer may include a timing control button and a slider, the timing control button may be connected with the slider to drive the slider to move among multiple positions, and the multiple positions of the slider may correspond to the multiple shifts of the timer.

In comparison with prior technologies, technical solutions of the present disclosure possess following advantages:

In the water sliding device provided by embodiments of the present disclosure, the water spray pipe is connected to the water source via a water valve which can automatically switch from an opened state to a closed state. Accordingly, when the user triggers a start button of the water valve, the water valve can be opened, so that the water spray pipe can start to spray water; and after certain period of time, the water valve can automatically switch to a closed state, so that the water spray pipe can stop spraying water, which can reduce water consumption and save water source.

Further, a first water spray pipe may be disposed between a first lateral edge and a second lateral edge of the sliding portion, and the sliding portion is divided to a plurality of sliding paths by the first water pipe, wherein the plurality of sliding paths can be used by multiple users at the same time.

Further, the water valve may be configured with a timer for adjusting a period of time for the water spray pipe spraying water.

### BRIEF DESCRIPTION OF THE DRAWINGS

Figure 1 schematically illustrates a structural diagram of a water sliding device according to one embodiment of the present disclosure;
Figure 2 schematically illustrates a structural diagram of a water sliding device according to another embodiment of the present disclosure;
Figure 3 partially illustrates a side view of a water sliding device according to one embodiment of the present disclosure;
Figure 4 schematically illustrates a water valve of a water sliding device according to one embodiment of the present disclosure;
Figure 5 schematically illustrates a sectional view of the water valve of the water sliding device according to one embodiment of the present disclosure; and
Figure 6 schematically illustrates another sectional view of the water valve of the water sliding device according to one embodiment of the present disclosure.

### DETAILED DESCRIPTION

Embodiments of the present disclosure provide a water sliding device. The water sliding device includes a sliding portion and a water valve. The sliding portion having a sliding surface suitable for a user sliding thereon. The sliding portion is disposed with a water spray pipe which has a plurality of water spray holes. The water spray pipe can be connected to a water source via the water valve. The water valve can automatically switch from an opened state to a closed state, so as to make the plurality of water spray holes of the water spray pipe automatically stop spraying water. Accordingly, when the water sliding device of the present disclosure is put in use, the user can make the water spray pipe start to spray water by triggering the water valve, and after a certain period of time, the water valve can automatically switch to the closed state, so that the water spray pipe can automatically stop spraying water. Therefore, water consumption can be reduced for saving water resource.

In order to make objectives, features and advantages of the present disclosure more clear, embodiments of the present disclosure will be described in detail in conjunction with the accompanying drawings.

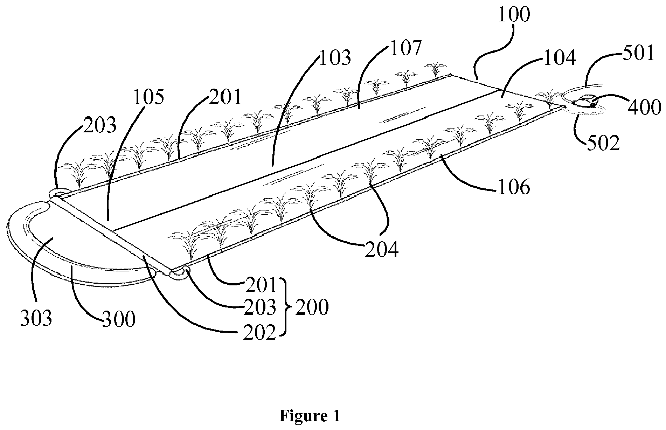

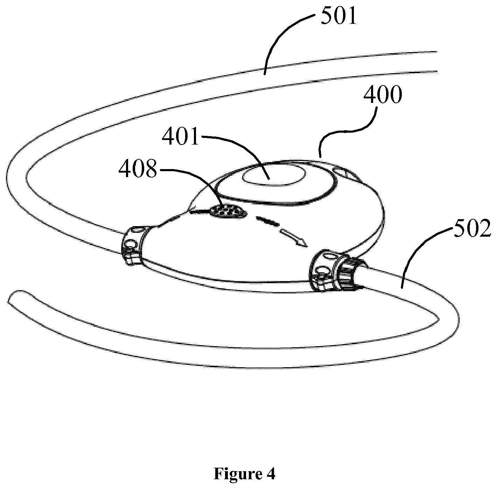

Referring to Figure 1 to Figure 4, embodiments of the present disclosure provides a water sliding device. The water sliding device may include: a sliding portion 100, a water spray pipe 200 disposed on the sliding portion 100, a bumper 300 and a water valve 400.

In some embodiments, the sliding portion 100 may include: an upper sheet 101 and a lower sheet 102. Edges of the upper sheet 101 and edges of the lower sheet 102 may be connected, and the upper sheet 101 and the lower sheet 102 define a first chamber. The first chamber can be filled with air or water.

In some embodiments, a top surface of the upper sheet 101 may serve as a sliding surface 103 of the sliding portion 100. The sliding surface 103 refers to a surface of the sliding portion 100 that suitable for a user sliding thereon.

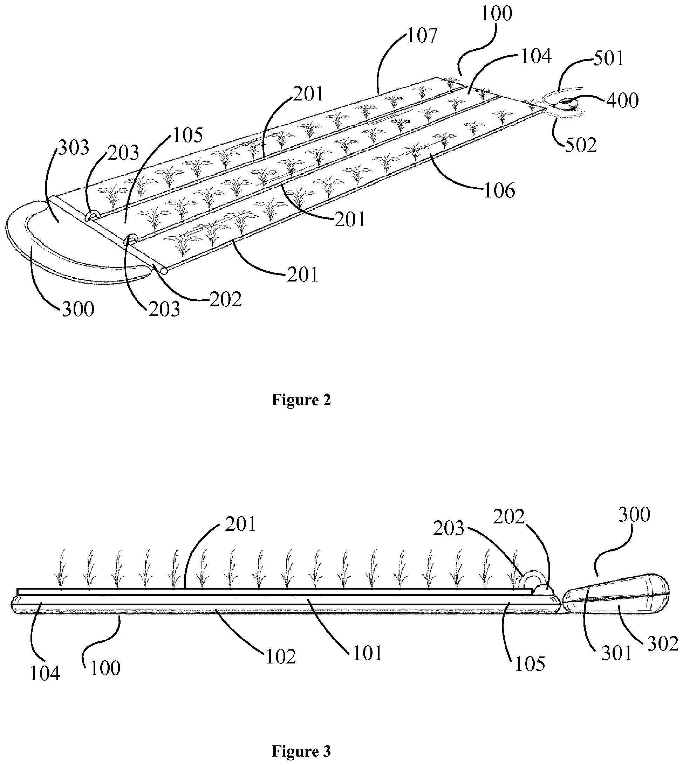

In Figure 3, the first chamber is in shown as being filled with air or water. In this case, the sliding portion 100 is inflated. Accordingly, when the user slides on the sliding surface 103 of the sliding portion 100, since the sliding portion 100 is inflated, the upper sheet 101 and the lower sheet 102 of the sliding portion 100 are distanced from each other, the user can be prevented from being hurt by objects (e.g., stones) on the ground. Therefore, a safety of the water sliding device can be improved.

In some embodiments, the sliding portion 100 may be configured into a single-layer structure. In other words, the sliding portion 100 may not have the first chamber. For example, the sliding portion 100 may include only one piece of flexible sheet. In this case, the water sliding device is optionally being used on a smooth ground.

In some embodiments, the edges of the upper sheet 101 and edges of the lower sheet 102 may be connected together by welding, such as, high-frequency welding.

In some embodiments, the upper sheet 101 and the lower sheet 102 of the sliding portion 100 may be made of flexible thermoplastic material, such as, PVC (Polyvinyl Chloride), PU (Polyurethane), etc.

Moreover, in order to make the first chamber of the sliding portion 100 be filled with air or water, an air valve or a water valve may be disposed on the sliding portion 100.

It should be noted that, in the embodiment shown in Figure 1 and Figure 2, the sliding portion 100 is shown having a rectangle shape, which is just for exemplarily illustrating the sliding portion 100. In other words, the shape of the sliding portion 100 of the water sliding device is not limited to the rectangle shown in Figure 1 and Figure 2. The sliding portion 100 may be configured having a square shape or an irregular shape, as long as the user can slide on the sliding portion 100.

In some embodiments, the water spray pipe 200 may include a first water spray pipe 201. The first water spray pipe 201 extends from a starting end 104 of the sliding portion 100 to a destination end 105 of the sliding portion 100. The starting end 104 of the sliding portion 100 refers to a beginning of a sliding process. The destination end 105 of the sliding portion refers to a destination of a sliding process. In other words, when the user slides on the sliding portion 100 of the water sliding device, the user slides from the starting end 104 of the sliding portion 100 to the destination end 105 of the sliding portion 100.

In some embodiments, the first water spray pipe 201 may be disposed along a first lateral edge 106 or along a second lateral edge 107 of the sliding portion 100. That is, the first water spray pipe 201 may be disposed at an edge part of the sliding portion 100.

In some embodiments, the first water spray pipe 200 may be disposed between the first lateral edge 106 and the second lateral edge 107. In this case, the sliding portion 100 can be divided to a plurality of sliding paths by the first water spray pipe 200.

In some embodiments, a number of the first water spray pipe 201 may be set to be one. The one first water spray pipe 201 may be disposed between the first lateral edge 106 and the second lateral edge 107 of the sliding portion 100, so that the sliding portion 100 is divided into two sliding paths. Or, the one first water spray pipe 201 may be disposed along the edge of the sliding portion 100 (e.g., the first lateral edge 106 or the second lateral edge 107).

In some embodiments, the number of the first water spray pipe 201 may be set to be two. The two first water spray pipes 201 may be disposed along the first lateral edge 106 and the second lateral edge 107 of the sliding portion 100, respectively (e.g., the first water spray pipes 201 shown in Figure 1). Or, both the two first water spray pipes 201 may be disposed between the first lateral edge 106 and the second lateral edge 107, so that the sliding potion 100 is divided into three sliding paths. Or, the two first water spray pipes 201 may have one being disposed along the first lateral edge 106 or the second lateral edge 107, and another one being disposed between the first lateral edge 106 and the second lateral edge 107.

In some embodiments, the number of the first water spray pipe 201 may be set to be more than two. Any one of the more than two first water spray pipes 201 may be disposed along the first lateral edge 106 or the second lateral edge 107, or be disposed between the first lateral edge 106 and the second lateral edge 107. Taking the embodiment shown in Figure 2 as an example, one of the three first water spray pipes 201 is disposed along the first lateral edge 106, and two of the three first water spray pipes 201 are disposed between the first lateral edge 106 and the second lateral edge 107.

In some embodiments, when the number of the first water spray pipe 201 is more than one, the more than one first water spray pipe 201 may be disposed in intervals.

In some embodiments, the water spray pipe 200 may further include a second water spray pipe 202. The second water spray pipe 202 extends from the first lateral edge 106 of the sliding portion 100 to the opposite second lateral edge 107 of the sliding portion 100.

In some embodiments, the second water spray pipe 202 may be disposed at the destination end 105 of the sliding portion 100.

In some embodiments, the second water spray pipe 202 may communicate with the first water spray pipe 201. Specifically, a connecting pipe 203 may be disposed between the second water spray pipe 202 and the first water spray pipe 201. One end of the connecting pipe 203 is connected with the second water spray pipe 202, and another end of the connecting pipe is connected with the first water spray pipe 201, so that the second water spray pipe 202 communicates with the first water spray pipe 201 via the connecting pipe 203. In some other embodiments, the second water spray pipe 202 may be directly connected with the first water spray pipe 201.

In some embodiments, when the number of the first water spray pipe 201 is more than one, the second water spray pipe 202 may communicate with all the more than one first water spray pipe 201. In this case, the more than one first water spray pipe 201 and the second water spray pipe 201 define a water passage. When any one of the first water spray pipe 201 and the second water spray pipe 202 communicates with the water source, water from the water source can flow into all of the first water spray pipe 201 and the second water spray pipe 202.

In some embodiments, the water spray pipe 200 may be configured having a plurality of water spray holes 204. When the water spry pipe 200 is connected with the water source, water from the water source can flow into the water spray pipe 200 and spout out from the water spray holes 204. Further, water spouted out from the water spray holes 204 can wet the sliding surface 103 of the sliding portion 100. Therefore, a friction of the sliding surface 103 can be reduced, which can make it easy for the user sliding on the sliding surface 103. It should be noted that, in Figure 1 to Figure 3, the water spray holes 204 are shown spraying water.

In some embodiments, the water spray pipe 200 may be configured as followed: only the first water spray pipe 201 has the water spray holes 204. Further, the first water spray pipe 201 may run through the sliding portion 100, as shown in Figure 1 and Figure 2, the first water spray pipe 201 runs from an edge of the starting end 104 of the sliding portion 100 to an edge of the destination end 105 of the sliding portion 100. Further, the plurality of water spray holes 204 may be evenly arranged on the first water spray pipe 201 in intervals. In this case, water spouted from the water spray holes 204 of the first water spray pipe 201 can cover entire area of the sliding surface 103 of the sliding portion 100, so as to completely wet the sliding surface 103.

In some embodiments, the water spray pipe 200 may be configured as followed: only the second water spray pipe 202 has the water spray holes 204, or both the first water spray pipe 201 and the second water spray pipe 202 have the water spray holes 204.

Moreover, in some embodiments, the first water spray pipe 201 may be configured covering part of the sliding portion 100 along a longitudinal direction. Similarly, the second water spray pipe 202 may be configured covering part of the sliding portion 100 along a lateral direction.

It should be noted that, the words "first" and "second" of the first water spray pipe 201 and the second water spray pipe 202 are just for distinguishing water pray pipes extended along different directions. Structures, sizes (e.g., diameter) and/or materials of the first water spray pipe 201 and the second water spray pipe 202 may be the same.

In some embodiments, all the first water spray pipe 201, the second water spray pipe 202 and the connecting pipe 203 may be made of flexible thermoplastic material, such as PVC, PU, etc. Moreover, connections among the first water spray pipe 201, the second water spray pipe 202, the connecting pipe 203 and the sliding portion 100 may be realized by high-frequency welding.

In some embodiments, the bumper 300 may be connected with the destination end 105 of the sliding portion 100.

In some embodiments, the bumper 300 may include a top sheet 301 and bottom sheet 302. Edges of the top sheet 301 and edges of the bottom sheet 302 may be connected, and the top sheet 301 and the bottom sheet 302 define a second chamber. The second chamber can be filled with air or water. When the second chamber is filled with air or water, the bumper 300 is inflated for providing buffering. Specifically, when the user slides to the destination end 105 of the sliding portion 100, the bumper 300 can stop the user continuing to slide.

In some embodiments, the top sheet 301 and the bottom sheet 302 may be made of flexible thermoplastic material, such as PVC, PU, etc. Moreover, the edges of the top sheet 301 and edges of the bottom sheet 302 may be connected together by high-frequency welding.

Further, in order to make the second chamber of the bumper 300 be filled with air or water, an air valve or a water valve may be disposed on the bumper 300.

In some embodiments, the bumper 300 may be connected with the sliding portion 100 via a connecting sheet 303. When the sliding portion 100 is configured into the single-layer structure, the connecting sheet 303 may extend from the sliding portion 100. In this case, the connecting sheet 303 and the sliding portion 100 are an integral component.

In some embodiments, the connecting sheet 303 may be made of flexible thermoplastic material, such as PVC, PU, etc. Moreover, connections among the connecting sheet 303, the bumper 300 and the sliding portion 100 may be realized by high-frequency welding.

In some embodiments, the water valve 400 may be disposed between the water spray pipe 200 and the water source. In other words, the water spray pipe 200 may be connected to the water source via the water valve 400. The water valve 400 can switch between an opened state and a closed state. When the water valve 400 switches to the opened state, the water spray holes 204 of the water spray pipe 200 can start to spray water. When the water valve 400 switches to the closed state, the water spray holes 204 of the water spray pipe 200 can stop spraying water. Accordingly, through the water valve 400, the water spray holes 204 of the water spray pipe 200 can be controlled to start to spray water or stop spraying water.

In some embodiments, an inlet of the water valve 400 may be connected with the water source via an inlet pipe 501. Specifically, the inlet pipe 501 may have one end connected with the inlet of the water valve 400, and another end connected with the water source.

In some embodiments, an outlet of the water valve 400 is connected with the water spray pipe 200 via an outlet pipe 502. Specifically, the outlet pipe 502 has one end connected to the water spray pipe 200, and another end connected with the outlet of the water valve 400.

In some embodiments, the inlet of the water valve 400 may be detachably connected with the inlet pipe 501. Similarly, the outlet of the water valve 400 may be detachably connected with the outlet pipe 502. Moreover, the outlet pipe 502 and the water spray pipe 200 may be detachably connected.

In some embodiments, the water valve 400 may be arranged at a position close to the starting end 104 of the sliding portion 100. By such a way, before starting to slide on the sliding portion 100, the user can trigger the water value 400 to make the water spray holes 204 of the water spray pipe 200 start to spray water for wetting the sliding surface 103, which can make it easy for the user sliding on the sliding portion 100.

In some embodiments, the water valve 400 may be connected with the first water spray pipe 201 via the outlet pipe 502. The outlet of the water valve 400 may be connected with an end of the first water spray pipe 201 close to the starting end 104 of the sliding portion 100. In this case, the water valve can be arranged at a position close to the starting end 104 of the sliding portion 100.

In some embodiments, the water valve 400 may include a start button 401. The user can control the water valve 400 via the start button 401. In some embodiments, the water valve 400 may be configured as followed: when the start button 401 is pressed, the water valve 400 is in the opened state, the water spray pipe 200 communicates with the water source, the water spray holes 204 starts to spray water; and after a certain period of time, the water valve 400 automatically switches to the closed state, communication between the water spray pipe 200 and the water source is blocked, the water spray holes 204 stops spraying water. Accordingly, the water valve 400 can make the water spray pipe 200 stop spraying water after a certain period of time, which will reduce water consumption and save water resource.

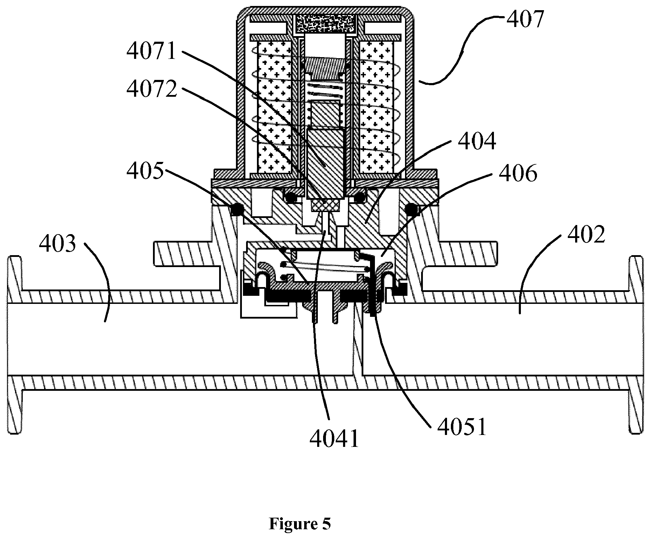

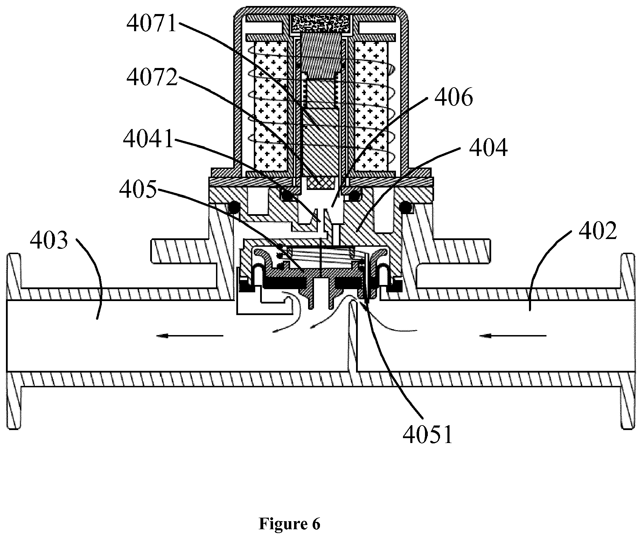

In order to make the water valve 100 automatically switch to the closed state after being opened for a certain period of time, embodiments of the present disclosure provide a water valve 400 as shown in Figure 5 and Figure 6.

Specifically, the water valve 400 includes: an inlet passage 402 and an outlet passage 403. The inlet passage 402 is connected with the inlet pipe 501 so as to communicate with the water source. The outlet passage 403 is connected with the outlet pipe 502 so as to communicate with the water spray pipe 200.

The water valve 400 further includes: a pressure-regulating chamber body 404 and a movable valve plate 405. The pressure-regulating chamber body 404 and the movable valve plate 405 define a pressure-regulating chamber 406. The pressure-regulating chamber 406 communicates with the inlet passage 402 via a water-inlet hole 4051 formed on the movable valve plate 405. The pressure-regulating chamber body 404 is configured with a drain hole 4041 thereon. The drain hole 4041 communicates with the pressure-regulating chamber 406. When there is a pressure difference inside and outside the pressure-regulating chamber 406, the movable valve plate 405 is adapted to move between a first position and a second position by different pressures inside the pressure-regulating chamber 406 and outside the pressure-regulating chamber 406 acting on the movable valve plat 405 so as to block or open the outlet passage 403.

The water valve 400 further includes a water-draining assembly 407. The water-draining assembly 407 includes a solenoid valve which is configured with a metal core assembly. The metal core assembly includes a metal core 4071 and a seal part 4072 connected to an end of the metal core 4071.

The solenoid valve is configured as followed: when a forward current passes through an electromagnetic coil of the solenoid valve, the metal core assembly moves to a position at which the drain hole 4041 is opened; when a reverse current passes through the electromagnetic coil of the solenoid valve, the metal core assembly moves to a position at which the drain hole 4041 is blocked.

In some embodiments, the water valve 400 may further include a control assembly. The control assembly include the start button 401 and a control circuitry. The control circuitry is configured to: when the start button 401 is pressed, transmit the forward current to the solenoid valve; and after a predetermined period of time, transmit the reverse current to the solenoid valve, wherein when the forward current is transmitted to the solenoid valve, the metal core assembly moves to the position at which the drain hole 4041 is opened, the movable valve plate 405 opens the outlet passage 403, the water valve 400 is in the opened state, when the reverse current is transmitted to the solenoid valve, the metal core assembly moves to the position at which the drain hole 4041 is closed, the movable valve plate 405 blocks the outlet passage 403, the water valve 400 switches from the opened state to the closed state.

In some embodiments, the water valve 400 may further include a timer 408 for determining the predetermined period of time.

In some embodiment, the timer 408 may include multiple shifts corresponding to multiple predetermined periods of time, respectively. Specifically, the timer 408 may include a timing control button and a slider. The timing control button and the slider are connected. The timing control button can drive the slider to slide among multiple positions, the multiple positions corresponds to the multiple shifts. In other words, though driving the slider to different positions, the predetermined period of time differs.

Accordingly, by default, the pressure-regulating chamber 406 is filled with water, a pressure inside the pressure-regulating chamber 406 is larger than a pressure outside the pressure-regulating chamber 406, due to the pressure difference inside and outside the pressure-regulating chamber 406, the movable valve plate 405 blocks the outlet passage 403, the water valve 400 is in the closed state. In this circumstance, if the start button 401 is pressed, the control circuitry transmits the forward current to the solenoid valve, the metal core assembly moves to the position at which the drain hole 4041 is opened, water in the pressure-regulating chamber 406 flows out via the drain hole 4041, the pressure inside the pressure-regulating chamber 406 decreases to a value smaller than that of the pressure outside the pressure-regulating chamber 406, due to the pressure difference inside and outside the pressure-regulating chamber 406, the movable valve plate 405 moves away from the outlet passage 403 to open the outlet passage 403, the water valve 400 switches to the opened state, the water spray holes 204 of the water spray pipe 200 starts to spray water. After the predetermined period of time, the control circuitry transmit the reverse current to the solenoid valve, the metal core assembly moves to the position at which the drain hole 4041 is closed, water from the water source flows into the inlet passage 402 and further flows into the pressure-regulating chamber 406 via the water-inlet hole 4051, the pressure inside the pressure-regulating chamber 406 gradually increases to a value greater than that of the pressure outside the pressure-regulating chamber 406, due to the pressure difference inside and outside the pressure-regulating chamber 406, the movable valve plate 405 moves towards the outlet passage 403 to block the outlet passage 403, the water valve 400 gradually switches to the closed state, the water spray holes 204 of the water spray pipe 200 automatically stops spraying water. Moreover, the user can adjust the predetermined period of time via the timer 408, so as to adjust an open time of water valve 400 and a water spraying time of the water spray pipe 200.

In some embodiments, a diameter of the drain hole 4041 may be greater than a diameter of the water-inlet hole 4051. By such a way, when the drain hole 4041 is opened, a volume of water flowing out from the pressure-regulating chamber 406 is larger than that of water flowing into the pressure-regulating chamber 406, the pressure inside the pressure-regulating chamber 406 can decrease to a value smaller than that of the pressure outside the pressure-regulating chamber 406, so that the movable valve plate 405 can move away from the outlet passage 403 to open the outlet passage 403, thus the water valve 400 can switch to the opened state.

Although the present disclosure has been disclosed above with reference to preferred embodiments thereof, it should be understood by those skilled in the art that various changes and modifications may be made without departing from the spirit or scope of the disclosure. Accordingly, the present disclosure covers changes and modifications made to the present disclosure that fall into scopes defined by the claims and equivalent technical solutions thereof.

## Claims

1. A water sliding device, **characterized by** comprising:
a sliding portion, having a sliding surface suitable for a user sliding thereon, wherein a water spray pipe with a plurality of water spray holes is disposed on the sliding portion; and
a water valve, wherein the water spray pipe is adapted to be connected with a water source via the water valve, and the water valve is configured to automatically switch from an opened state to a closed state, to make the plurality of water spray holes of the water spray pipe automatically stop spraying water.

2. The water sliding device according to claim 1, **characterized in that**, the sliding portion comprises a flexible sheet.

3. The water sliding device according to claim 1, **characterized in that**, the sliding portion comprises an upper sheet and a lower sheet, edges of the upper sheet and edges of the lower sheet are connected, and the upper sheet and the lower sheet define a first chamber adapted to be filled with air or water.

4. The water sliding device according to claim 1, **characterized in that**, the water spray pipe comprises at least one first water spray pipe extending from a starting end of the sliding portion to a destination end of the sliding portion, wherein the destination end is opposite to the starting end.

5. The water sliding device according to claim 1, **characterized in that**, the water spray pipe comprises a second water spray pipe extending from a first lateral edge of the sliding portion to a second lateral edge of the sliding portion.

6. The water sliding device according to claim 5, **characterized in that**, the second water spray pipe communicates with a first water spray pipe.

7. The water sliding device according to claim 1, **characterized by** further comprising a bumper connected with a destination end of the sliding portion, wherein the bumper is provided with a second chamber adapted to be filled with air or water.

8. The water sliding device according to claim 7, **characterized in that**, the bumper is connected with the sliding portion via a connecting sheet.

9. The water sliding device according to claim 1, **characterized in that**, the water valve is arranged at a position close to a starting end of the sliding portion.

10. The water sliding device according to claim 9, **characterized in that**, an outlet of the water valve communicates with an end of a first water spray pipe close to the starting end.

11. The water sliding device according to claim 1, **characterized in that**, an inlet of the water valve communicates with the water source via an inlet pipe, and the inlet of the water valve is detachably connected with the inlet pipe.

12. The water sliding device according to claim 1, **characterized in that**, the water valve comprises:
an inlet passage and an outlet passage, wherein the inlet passage communicates with the water source, and the outlet passage communicates with the water spray pipe;
a pressure-regulating chamber body and a movable valve plate, wherein the pressure-regulating chamber body and the movable valve plate define a pressure-regulating chamber, the pressure-regulating chamber communicates with the inlet passage via a water-inlet hole formed on the movable valve plate, the pressure-regulating chamber body is provided with a drain hole, the drain hole communicates with the pressure-regulating chamber, and the movable valve plate is adapted to move between a first position and a second position by different pressures inside the pressure-regulating chamber and outside the pressure-regulating chamber acting on the movable valve plate so as to block or open the outlet passage;
a water-draining assembly for blocking or opening the drain hole; and
a control assembly, electrically connected with the water-draining assembly, wherein the control assembly is configured to control the water-draining assembly to block or open the drain hole.

13. The water sliding device according to claim 12, **characterized in that**, the water-draining assembly comprises a solenoid valve provided with a metal core assembly; when a forward current passes through an electromagnetic coil of the solenoid valve, the metal core assembly of the solenoid valve is adapted to move to a position to open the drain hole; when a reverse current passes through the electromagnetic coil of the solenoid valve, the metal core assembly of the solenoid valve is adapted to move to a position to close the drain hole.

14. The water sliding device according to claim 12, **characterized in that**, the control assembly comprises a start button and a control circuitry; the control circuitry is configured to: when the start button is pressed, control the water-draining assembly to open the drain hole, to make the movable valve plate open the outlet passage, so that the water valve switches to the opened state, and after a predetermined period of time, control the water-draining assembly to block the drain hole, to make the movable valve plate block the outlet passage, so that the water valve switches to the closed state.

15. The water sliding device according to claim 14, **characterized in that**, the control assembly further comprises a timer for determining the predetermined period of time.

16. The water sliding device according to claim 15, **characterized in that**, the timer comprises multiple shifts corresponding to multiple predetermined periods of time.

17. The water sliding device according to claim 16, **characterized in that**, the timer comprises a timing control button and a slider, the timing control button is connected with the slider to drive the slider to move among multiple positions, and the multiple positions of the slider correspond to the multiple shifts of the timer.

## Amended claims

### Amended claims in accordance with Rule 137(2) EPC.

1. A water sliding device, comprising:
a sliding portion (100), having a sliding surface (103) suitable for a user sliding thereon, wherein a water spray pipe (200) with a plurality of water spray holes (204) is disposed on the sliding portion (100); and
**characterized by** further comprising a water valve (400), wherein the water spray pipe (200) is adapted to be connected with a water source via the water valve (400), and the water valve (400) is configured to automatically switch from an opened state to a closed state, to make the plurality of water spray holes (204) of the water spray pipe (200) automatically stop spraying water; and
wherein the water valve (400) comprises:
an inlet passage (402) and an outlet passage (403), wherein the inlet passage (402) is configured to communicate with the water source, and the outlet passage (403) is configured to communicate with the water spray pipe (200); and
a pressure-regulating chamber body (404) and a movable valve plate (405) collectively defining a pressure-regulating chamber (406), wherein the movable valve plate (405) is configured to move between a first position and a second position by different pressures inside and outside the pressure-regulating chamber (406) acting on the movable valve plate (405) so as to block or open the outlet passage (403).

2. The water sliding device according to claim 1, **characterized in that**, the sliding portion (100) comprises a flexible sheet.

3. The water sliding device according to claim 1, **characterized in that**, the sliding portion (100) comprises an upper sheet (101) and a lower sheet (102), edges of the upper sheet (101) and edges of the lower sheet (102) are connected, and the upper sheet (101) and the lower sheet (102) define a first chamber adapted to be filled with air or water.

4. The water sliding device according to claim 1, **characterized in that**, the water spray pipe (200) comprises at least one first water spray pipe (201) extending from a starting end (104) of the sliding portion (100) to a destination end (105) of the sliding portion (100), wherein the destination end (105) is opposite to the starting end (104).

5. The water sliding device according to claim 1, **characterized in that**, the water spray pipe (200) comprises a second water spray pipe (202) extending from a first lateral edge (106) of the sliding portion (100) to a second lateral edge (107) of the sliding portion (100).

6. The water sliding device according to claim 5, **characterized in that**, the second water spray pipe (202) communicates with [[a]]the first water spray pipe (201).

7. The water sliding device according to claim 1, **characterized by** further comprising a bumper (300) connected with a destination end (105) of the sliding portion (100), wherein the bumper (300) is provided with a second chamber adapted to be filled with air or water.

8. The water sliding device according to claim 7, **characterized in that**, the bumper (300) is connected with the sliding portion (100) via a connecting sheet (303).

9. The water sliding device according to claim 1, **characterized in that**, the water valve (400) is arranged at a position close to a starting end (104) of the sliding portion (100).

10. The water sliding device according to claim 9, **characterized in that**, an outlet of the water valve (400) communicates with an end of a first water spray pipe (201) close to the starting end (104).

11. The water sliding device according to claim 1, **characterized in that**, an inlet of the water valve (400) communicates with the water source via an inlet pipe (501), and the inlet of the water valve (400) is detachably connected with the inlet pipe (501).

12. The water sliding device according to claim 1, **characterized in that**, the pressure-regulating chamber (406) communicates with the inlet passage (402) via a water-inlet hole (4051) formed on the movable valve plate (405), the pressure-regulating chamber body (404) is provided with a drain hole (4041), the drain hole (4041) communicates with the pressure-regulating chamber (406); and
the water valve (400) further comprises:
a water-draining assembly (407) for blocking or opening the drain hole (4041); and
a control assembly, electrically connected with the water-draining assembly (407), wherein the control assembly is configured to control the water-draining assembly (407) to block or open the drain hole (4041).

13. The water sliding device according to claim 12, **characterized in that**, the water-draining assembly (407) comprises a solenoid valve provided with a metal core assembly; when a forward current passes through an electromagnetic coil of the solenoid valve, the metal core assembly of the solenoid valve is adapted to move to a position to open the drain hole (4041); when a reverse current passes through the electromagnetic coil of the solenoid valve, the metal core assembly of the solenoid valve is adapted to move to a position to close the drain hole (4041).

14. The water sliding device according to claim 12, **characterized in that**, the control assembly comprises a start button (401) and a control circuitry; the control circuitry is configured to: when the start button (401) is pressed, control the water-draining assembly (407) to open the drain hole (4041), to make the movable valve plate (405) open the outlet passage (403), so that the water valve (400) switches to the opened state, and after a predetermined period of time, control the water-draining assembly (407) to block the drain hole (4041), to make the movable valve plate (405) block the outlet passage (403), so that the water valve (400) switches to the closed state.

15. The water sliding device according to claim 14, **characterized in that**, the control assembly further comprises a timer (408) for determining the predetermined period of time.

16. The water sliding device according to claim 15, **characterized in that**, the timer (408) comprises multiple shifts corresponding to multiple predetermined periods of time.

17. The water sliding device according to claim 16, **characterized in that**, the timer (408) comprises a timing control button and a slider, the timing control button is connected with the slider to drive the slider to move among multiple positions, and the multiple positions of the slider correspond to the multiple shifts of the timer.
